# EUROPÄISCHE PATENTSCHRIFT

(11) **EP 2 307 185 B1**
(45) Veröffentlichungstag und Bekanntmachung des Hinweises auf die Patenterteilung: **06.08.2014**
(21) Anmeldenummer: 09775895.7
(22) Anmeldetag: 18.06.2009
(51) Int. Cl.: B29C 49/78, B29C 49/12, B29C 49/64

(54) **VERFAHREN UND VORRICHTUNG ZUR BLASFORMUNG VON BEHÄLTERN**
METHOD AND APPARATUS FOR BLOW MOULDING OF CONTAINERS
PROCÉDÉ ET APPAREIL POUR MOULAGE PAR SOUFFLAGE DES RECIPIENTS

(30) Priorität: 04.08.2008 DE 102008038782
(43) Veröffentlichungstag der Anmeldung: 13.04.2011
(73) Patentinhaber: KHS Corpoplast GmbH, 22145 Hamburg (DE)
(72) Erfinder: HAESENDONCKX, Frank, 22395 Hamburg (DE); BALKAU, Karl-Heinz, 22113 Oststeinbek (DE); MATTHIESEN, Martin, 22359 Hamburg (DE); BAUMGARTE, Rolf, 22926 Ahrensburg (DE); LEWIN, Frank, 22889 Tangstedt (DE); LITZENBERG, Michael, 21502 Geesthacht (DE); LINKE, Michael, 22047 Hamburg (DE)
(74) Vertreter: Hausfeld, Norbert
(86) Internationale Anmeldenummer: PCT/DE2009/000852
(87) Internationale Veröffentlichungsnummer: WO 2010/015220

(56) Entgegenhaltungen:
- DE-A1- 10 116 665
- DE-A1- 19 843 053
- FR-A1- 2 881 979

## Beschreibung

Die Erfindung betrifft ein Verfahren zur Blasformung von Behältern, bei dem ein Vorformling aus einem thermoplastischen Material nach einer thermischen Konditionierung entlang eines Transportweges im Bereich einer Heizstrecke innerhalb einer Blasform gereckt und durch Blasdruckeinwirkung in den Behälter umgeformt wird.

Die Erfindung betrifft darüber hinaus eine Vorrichtung zur Blasformung von Behältern aus einem thermoplastischen Material, die mindestens eine entlang eines Transportweges eines Vorformlings angeordnete Heizstrecke und eine mit einer Blasform versehene Blasstation aufweist, sowie bei der die Heizstrecke mindestens ein Heizelement aufweist und bei der im Bereich der Blasstation eine Reckeinrichtung angeordnet ist.

Bei einer Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Die einleitend erwähnte Einleitung des unter Druck stehenden Gases umfaßt auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert.

Innerhalb der Vorrichtung zur Blasformung können die Vorformlinge sowie die geblasenen Behälter mit Hilfe unterschiedlicher Handhabungseinrichtungen transportiert werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehören ebenfalls zu den verfügbaren Konstruktionen.

Eine Handhabung von Behältern unter Verwendung von Übergaberädern wird beispielsweise in der DE-OS 199 06 438 bei einer Anordnung des Übergaberades zwischen einem Blasrad und einer Ausgabestrecke beschrieben.

Die bereits erläuterte Handhabung der Vorformlinge erfolgt zum einen bei den sogenannten Zweistufenverfahren, bei denen die Vorformlinge zunächst in einem Spritzgußverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgußtechnischen Herstellung und einer ausreichenden Verfestigung geeignet temperiert und anschließend aufgeblasen werden.

Im Hinblick auf die verwendeten Blasstationen sind unterschiedliche Ausführungsformen bekannt. Bei Blasstationen, die auf rotierenden Transporträdern angeordnet sind, ist eine buchartige Aufklappbarkeit der Formträger häufig anzutreffen. Es ist aber auch möglich, relativ zueinander verschiebliche oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Vor einer Durchführung der Beheizung werden die Vorformlinge typischerweise auf Transportdorne aufgesteckt, die den Vorformling entweder durch die gesamte Blasmaschine transportieren oder die lediglich im Bereich der Heizeinrichtung umlaufen. Bei einer stehenden Beheizung der Vorformlinge derart, daß die Mündungen der Vorformlinge in lotrechter Richtung nach unten orientiert sind, werden die Vorformlinge üblicherweise auf ein hülsenförmiges Halterungselement des Transportdornes aufgesteckt. Bei einer hängenden Beheizung der Vorformlinge, bei der diese mit ihren Mündungen in lotrechter Richtung nach oben orientiert sind, werden in der Regel Spreizdorne in die Mündungen der Vorformlinge eingeführt, die die Vorformlinge festklemmen.

Aus der DE 198 43 053 A1 ist es bereits bekannt, ungleichmäßige Temperaturverteilungen innerhalb unterschiedlicher Vorformlinge dadurch zu berücksichtigen, dass jeweils an die Vorformlinge angepasste unterschiedliche spezifische Blasparameter verwendet werden. Beispielsweise können dies die Reckgeschwindigkeit oder ein zeitlicher Beginn des Reckvorganges sein. Die relativ zueinander unterschiedlichen Temperaturverteilungen innerhalb der Vorformlinge werden bei einem einstufigen Blasvorgang dadurch generiert, dass eine Vielzahl von Vorformlingen gleichzeitig spritzgegossen, aber sequentiell verarbeitet werden.

Aus der DE 101 16 665 A1 ist es bekannt, mindestens einen Blasparameter in Abhängigkeit von einer messtechnisch erfassten Wandstärke des geblasenen Behälters zu verändern. Der Blasparameter kann die Reckgeschwindigkeit oder die zeitliche Koordinierung des Reckvorganges sein.

In der FR 2 881 979 A1 wird eine Blasmaschine mit einem rotierenden Blasrad sowie einer Heizstrecke beschrieben, bei der von Sensoren umfasste Messwerte einer Steuereinheit zugeführt werden.

Bei der Durchführung einer blastechnischen Behälterformung besteht eine wesentliche Aufgabe darin, in der Behälterwandung eine vorgegebene Materialverteilung zu erreichen. Ein wesentlicher Parameter zur Vorgabe der sich ergebenden Materialverteilung stellt die Verteilung der vor der Blasformung in den Vorformlingen realisierten Wärmeverteilung dar.

Die Wärmeverteilung wird typischerweise derart realisiert, daß in einer Umfangsrichtung der Vorformlinge ein gleiches Temperaturniveau und in einer Längsrichtung der Vorformlinge ein Temperaturprofil erzeugt wird. Darüber hinaus erfolgt auch durch die Wand des Vorformlings hindurch von außen nach innen die Vorgabe eines geeigneten Temperaturprofils. Grundsätzlich ist davon auszugehen, daß Bereiche des Vorformlings mit einer geringeren Temperatur zu dickeren Wandungsbereichen des geblasenen Behälters führen und daß die wärmeren Bereiche des Vorformlings bei der Durchführung der Blasverformung stärker verstreckt werden und hierdurch zu dünneren Wandungsbereichen des geblasenen Behälters führen.

Neben der Wärmeverteilung innerhalb der Wandung der Vorformlinge stellen die auf den Vorformling einwirkende Reckkraft sowie die durch die Geometrie des Vorformlings vorgegebene Materialverteilung wesentliche Parameter dar, die die nach der Durchführung des Blasvorganges im Bereich des geblasenen Behälters realisierte Materialverteilung beeinflussen.

Die Wärmeverteilung innerhalb der Wandung der Vorformlinge hängt nicht nur von einer aktuellen Heizleistung der verwendeten Heizelemente, sondern auch von der ebenfalls auf die Vorformlinge einwirkenden Ofentemperatur ab. Die Ofentemperatur befindet sich bei einem Einschalten der Blasmaschine in der Regel auf einem Temperaturniveau der Umgebungsluft und nimmt nach einer Anfahrbetriebszeit die endgültige Betriebstemperatur an. Die Ofentemperatur ist zusätzlich abhängig von Umgebungsparametern wie der Temperatur der Umgebungsluft, der Luftfeuchte sowie gegebenenfalls einwirkender Luftströmungen. Ebenfalls ist es bei bestimmten Ausführungsformen bekannt, die im Ofenbereich angeordneten Bauelemente durch Kühlwasser oder Kühlluft zu temperieren.

Die zu einem Beginn der Produktionsaufnahme gegenüber einer Betriebstemperatur niedrigere Ofentemperatur und das Absinken der Ofentemperatur während Betriebspausen der Maschine führen dazu, daß Behälter, die bis zu einem Erreichen der Betriebstemperatur produziert werden, nicht die geforderte Qualität aufweisen und deshalb nicht verwendet werden können. Ein Aufheizen des Ofens ohne einen Materialtransport erweist sich ebenfalls nicht als zweckmäßig, da hierdurch eine Produktionsaufnahme erheblich zeitlich verzögert wird und sich eine stabile Betriebstemperatur nur in Abhängigkeit von einem Materialdurchlauf durch den Ofen einstellt.

Die aufgrund dieser Betriebsweise der Blasmaschinen anfallenden Ausschußmengen bzw. die Verzögerungen bei der Produktionsaufnahme werden als unbefriedigend empfunden und führen im Ergebnis zu einem erhöhten Kostenanfall durch den Materialausschuß bzw. die nicht genutzte Produktionszeit.

Aufgabe der vorliegenden Erfindung ist es daher, ein Verfahren der einleitend genannten Art derart zu verbessern, daß mit geringer zeitlicher Verzögerung zu einer Produktionsaufnahme qualitativ hochwertige Behälter hergestellt werden.

Diese Aufgabe wird erfindungsgemäß dadurch gelöst, daß im Bereich der Heizstrecke angeordnete Heizelemente während einer Produktion mit einer im wesentlichen konstanten Heizleistung betrieben werden und daß die Geschwindigkeit des Reckens bei der Herstellung von Behältern unmittelbar im Anschluß an einen Beginn der Produktionsaufnahme unterschiedlich zur Geschwindigkeit des Reckens bei der Herstellung von Behältern in einer Produktionsphase in einem zeitlichen Abstand zur Produktionsaufnahme gesteuert wird.

Weitere Aufgabe der vorliegenden Erfindung ist es, eine Vorrichtung der einleitend genannten Art derart zu konstruieren, daß mit einem kurzen zeitlichen Abstand zu einer Produktionsaufnahme der Herstellung von qualitativ hochwertigen Behältern unterstützt wird.

Diese Aufgabe wird erfindungsgemäß dadurch gelöst, daß das Heizelement an eine Heizsteuerung angeschlossen ist, die eine Steuerungscharakteristik derart aufweist, daß die Heizelemente mit einer zeitlich im wesentlichen konstanten Heizleistung betrieben werden und daß die Reckeinrichtung an eine Recksteuerung angeschlossen ist, die eine Steuerungscharakteristik derart aufweist, daß eine Reckgeschwindigkeit unmittelbar im Anschluß an einen Start des Betriebes der Vorrichtung unterschiedlich zu einer Reckgeschwindigkeit in einer Produktionsphase mit einem zeitlichen Abstand zur Aufnahme des Betriebes vorgegeben ist.

Durch die Veränderung der Reckgeschwindigkeit im Anschluß an eine Produktionsaufnahme werden die aus der zum Produktionsbeginn gegenüber einer Betriebstemperatur zu niedrigen Ofentemperaturen kompensiert. Es wird somit ausgenutzt, daß die Materialverteilung im geblasenen Behälter von mehreren Parametern abhängig ist. Bei einer bekannten Abweichung eines dieser Parameter von seinem Sollwert kann eine Kompensation dieser Sollwertabweichung durch eine vorgegebene Abweichung eines der anderen Parameter von seinem Sollwert erreicht werden.

Eine Ausbildungsvariante in Form einer reinen Steuerung kann dadurch bereitgestellt werden, daß die Reckgeschwindigkeit in Abhängigkeit von einer Aufheizzeit gesteuert wird.

Materialbedingte Eigenschaften der Vorformling und/oder der Behälter können dadurch berücksichtigt werden, daß die Reckgeschwindigkeit in Abhängigkeit von einem Materialparameter des Vorformlings gesteuert wird.

Eine meßwertbasierte Steuerung wird dadurch erreicht, daß die Reckgeschwindigkeit in Abhängigkeit von einer Ofentemperatur gesteuert wird.

Geometrische Dimensionierungen des Vorformlings können dadurch berücksichtigt werden, daß die Reckgeschwindigkeit in Abhängigkeit von einer Vorformlingsgeometrie gesteuert wird.

Eine meßwertgestützte Steuerung kann insbesondere dadurch erfolgen, daß die Ofentemperatur meßtechnisch erfaßt wird.

Gemäß einer Ausführungsvariante ist vorgesehen, daß durch eine vergrößerte Reckgeschwindigkeit ein vergrößertes Bodengewicht im Bereich des Behälters generiert wird.

Ebenfalls ist daran gedacht, daß durch eine verminderte Reckgeschwindigkeit ein vermindertes Bodengewicht im Bereich des Behälters generiert wird.

In den Zeichnungen sind Ausführungsbeispiele der Erfindung schematisch dargestellt. Es zeigen:
Fig. 1 Eine perspektivische Darstellung einer Blasstation zur Herstellung von Behältern aus Vorformlingen,
Fig. 2 einen Längsschnitt durch eine Blasform, in der ein Vorformling gereckt und expandiert wird,
Fig. 3 eine Skizze zur veranschaulichung eines grundsätzlichen Aufbaus einer Vorrichtung zur Blasformung von Behältern,
Fig. 4 eine modifizierte Heizstrecke mit vergrößerter Heizkapazität,
Fig. 5 einen Querschnitt durch ein Heizelement mit einer Mehrzahl übereinander angeordneter Heizstrahler sowie einen zugeordneten Vorformling und
Fig. 6 ein Diagramm zur veranschaulichung von variablen Reckgeschwindigkeiten in Abhängigkeit von einer gemessenen Ofentemperatur.

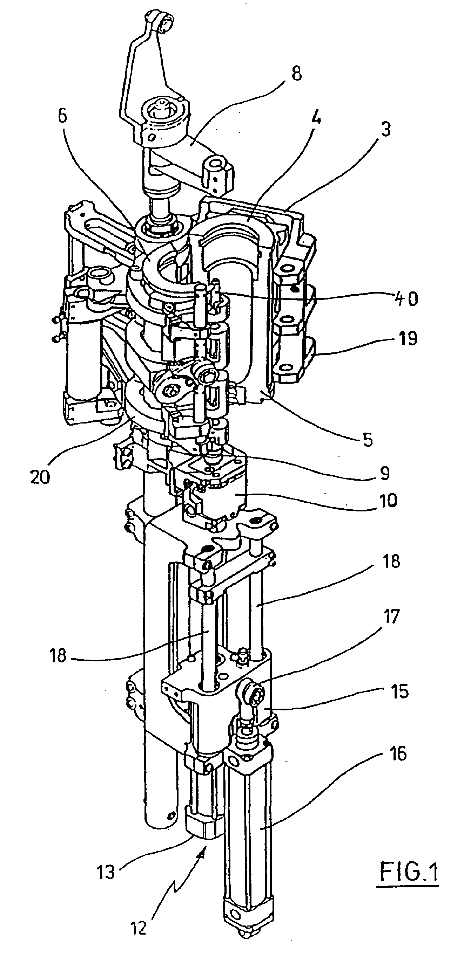

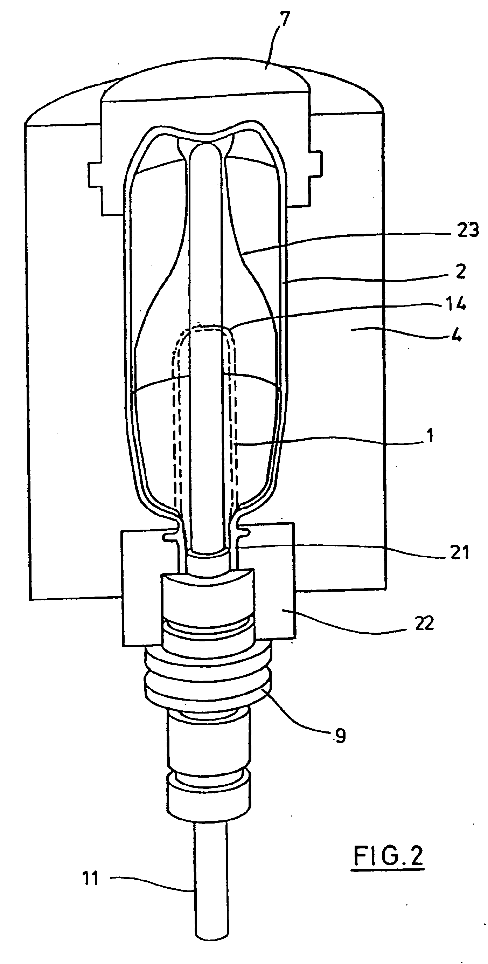

Der prinzipielle Aufbau einer Vorrichtung zur Umformung von Vorformlingen (1) in Behälter (2) ist in Fig. 1 und in Fig. 2 dargestellt.

Die Vorrichtung zur Formung des Behälters (2) besteht im wesentlichen aus einer Blasstation (3), die mit einer Blasform (4) versehen ist, in die ein Vorformling (1) einsetzbar ist. Der Vorformling (1) kann ein spritzgegossenes Teil aus Polyethylenterephthalat sein. Zur Ermöglichung eines Einsetzens des Vorformlings (1) in die Blasform (4) und zur Ermöglichung eines Herausnehmens des fertigen Behälters (2) besteht die Blasform (4) aus Formhälften (5, 6) und einem Bodenteil (7), das von einer Hubvorrichtung (8) positionierbar ist. Der Vorformling (1) kann im Bereich der Blasstation (3) von einem Transportdorn (9) gehalten sein, der gemeinsam mit dem Vorformling (1) eine Mehrzahl von Behandlungsstationen innerhalb der Vorrichtung durchläuft. Es ist aber auch möglich, den Vorformling (1) beispielsweise über Zangen oder andere Handhabungsmittel direkt in die Blasform (4) einzusetzen.

Zur Ermöglichung einer Druckluftzuleitung ist unterhalb des Transportdornes (9) ein Anschlußkolben (10) angeordnet, der dem Vorformling (1) Druckluft zuführt und gleichzeitig eine Abdichtung relativ zum Transportdorn (9) vornimmt. Bei einer abgewandelten Konstruktion ist es grundsätzlich aber auch denkbar, feste Druckluftzuleitungen zu verwenden.

Eine Reckung des Vorformlings (1) erfolgt bei diesem Ausführungsbeispiel mit Hilfe einer Reckstange (11), die von einem Zylinder (12) positioniert wird. Gemäß einer anderen Ausführungsform wird eine mechanische Positionierung der Reckstange (11) über Kurvensegmente durchgeführt, die von Abgriffrollen beaufschlagt sind. Die Verwendung von Kurvensegmenten ist insbesondere dann zweckmäßig, wenn eine Mehrzahl von Blasstationen (3) auf einem rotierenden Blasrad angeordnet sind

Bei der in Fig. 1 dargestellten Ausführungsform ist das Recksystem derart ausgebildet, daß eine TandemAnordnung von zwei Zylindern (12) bereitgestellt ist. Von einem Primärzylinder (13) wird die Reckstange (11) zunächst vor Beginn des eigentlichen Reckvorganges bis in den Bereich eines Bodens (14) des Vorformlings (1) gefahren. Während des eigentlichen Reckvorganges wird der Primärzylinder (13) mit ausgefahrener Reckstange gemeinsam mit einem den Primärzylinder (13) tragenden Schlitten (15) von einem Sekundärzylinder (16) oder über eine Kurvensteuerung positioniert. Insbesondere ist daran gedacht, den Sekundärzylinder (16) derart kurvengesteuert einzusetzen, daß von einer Führungsrolle (17), die während der Durchführung des Reckvorganges an einer Kurvenbahn entlang gleitet, eine aktuelle Reckposition vorgegeben wird. Die Führungsrolle (17) wird vom Sekundärzylinder (16) gegen die Führungsbahn gedrückt. Der Schlitten (15) gleitet entlang von zwei Führungselementen (18).

Nach einem Schließen der im Bereich von Trägern (19, 20) angeordneten Formhälften (5, 6) erfolgt eine verriegelung der Träger (19, 20) relativ zueinander mit Hilfe einer Verriegelungseinrichtung (20).

Zur Anpassung an unterschiedliche Formen eines Mündungsabschnittes (21) des Vorformlings (1) ist gemäß Fig. 2 die Verwendung separater Gewindeeinsätze (22) im Bereich der Blasform (4) vorgesehen.

Fig. 2 zeigt zusätzlich zum geblasenen Behälter (2) auch gestrichelt eingezeichnet den Vorformling (1) und schematisch eine sich entwickelnde Behälterblase (23).

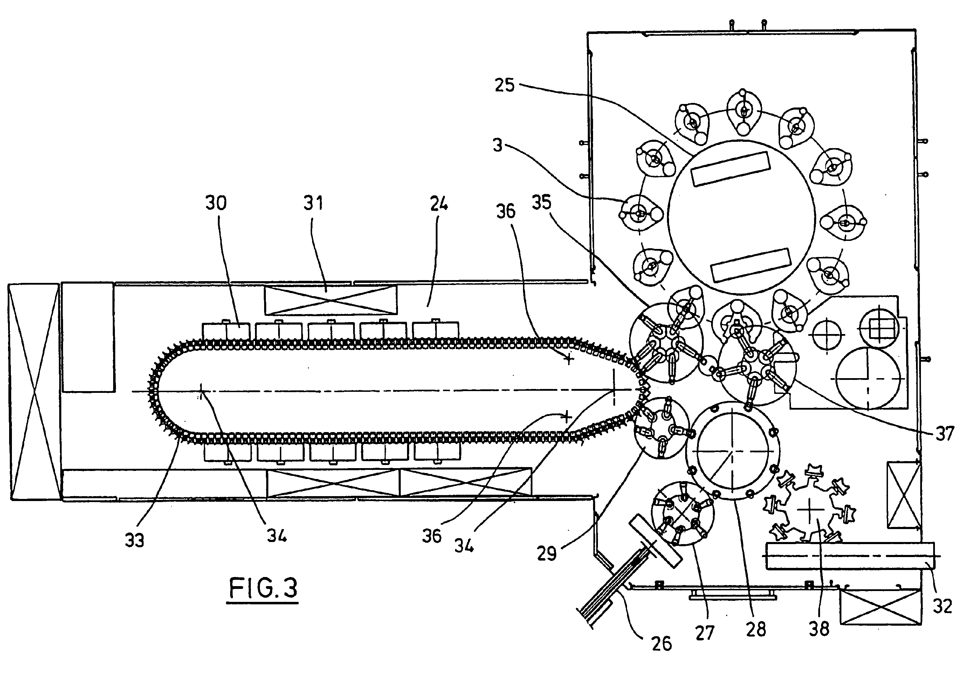

Fig. 3 zeigt den grundsätzlichen Aufbau einer Blasmaschine, die mit einer Heizstrecke (24) sowie einem rotierenden Blasrad (25) versehen ist. Ausgehend von einer Vorformlingseingabe (26) werden die Vorformlinge (1) von Übergaberädern (27, 28, 29) in den Bereich der Heizstrecke (24) transportiert. Entlang der Heizstrecke (24) sind Heizelement (30) sowie Gebläse (31) angeordnet, um die Vorformlinge (1) zu temperieren. Nach einer ausreichenden Temperierung der Vorformlinge (1) werden diese an das Blasrad (25) übergeben, in dessen Bereich die Blasstationen (3) angeordnet sind. Die fertig geblasenen Behälter (2) werden von weiteren Übergaberädern einer Ausgabestrecke (32) zugeführt.

Um einen Vorformling (1) derart in einen Behälter (2) umformen zu können, daß der Behälter (2) Materialeigenschaften aufweist, die eine lange Verwendungsfähigkeit von innerhalb des Behälters (2) abgefüllten Lebensmitteln, insbesondere von Getränken, gewährleisten, müssen spezielle Verfahrensschritte bei der Beheizung und Orientierung der Vorformlinge (1) eingehalten werden. Darüber hinaus können vorteilhafte Wirkungen durch Einhaltung spezieller Dimensionierungsvorschriften erzielt werden.

Als thermoplastisches Material können unterschiedliche Kunststoffe verwendet werden. Einsatzfähig sind beispielsweise PET, PEN oder PP.

Die Expansion des Vorformlings (1) während des Orientierungsvorganges erfolgt durch Druckluftzuführung. Die Druckluftzuführung ist in eine vorblasphase, in der Gas, zum Beispiel Preßluft, mit einem niedrigen Druckniveau zugeführt wird und in eine sich anschließende Hauptblasphase unterteilt, in der Gas mit einem höheren Druckniveau zugeführt wird. Während der Vorblasphase wird typischerweise Druckluft mit einem Druck im Intervall von 10 bar bis 25 bar verwendet und während der Hauptblasphase wird Druckluft mit einem Druck im Intervall von 25 bar bis 40 bar zugeführt.

Aus Fig. 3 ist ebenfalls erkennbar, daß bei der dargestellten Ausführungsform die Heizstrecke (24) aus einer Vielzahl umlaufender Transportelemente (33) ausgebildet ist, die kettenartig aneinandergereiht und entlang von Umlenkrädern (34) geführt sind. Insbesondere ist daran gedacht, durch die kettenartige Anordnung eine im wesentlichen rechteckförmige Grundkontur aufzuspannen. Bei der dargestellten Ausführungsform werden im Bereich der dem Übergaberad (29) und einem Eingaberad (35) zugewandten Ausdehnung der Heizstrecke (24) ein einzelnes relativ groß dimensioniertes Umlenkrad (34) und im Bereich von benachbarten Umlenkungen zwei vergleichsweise kleiner dimensionierte Umlenkräder (36) verwendet. Grundsätzlich sind aber auch beliebige andere Führungen denkbar.

Zur Ermöglichung einer möglichst dichten Anordnung des Übergaberades (29) und des Eingaberades (35) relativ zueinander erweist sich die dargestellte Anordnung als besonders zweckmäßig, da im Bereich der entsprechenden Ausdehnung der Heizstrecke (24) drei Umlenkräder (34, 36) positioniert sind, und zwar jeweils die kleineren Umlenkräder (36) im Bereich der Überleitung zu den linearen Verläufen der Heizstrecke (24) und das größere Umlenkrad (34) im unmittelbaren Übergabebereich zum Übergaberad (29) und zum Eingaberad (35). Alternativ zur Verwendung von kettenartigen Transportelementen (33) ist es beispielsweise auch möglich, ein rotierendes Heizrad zu verwenden.

Nach einem fertigen Blasen der Behälter (2) werden diese von einem Entnahmerad (37) aus dem Bereich der Blasstationen (3) herausgeführt und über das Übergaberad (28) und ein Ausgaberad (38) zur Ausgabestrecke (32) transportiert.

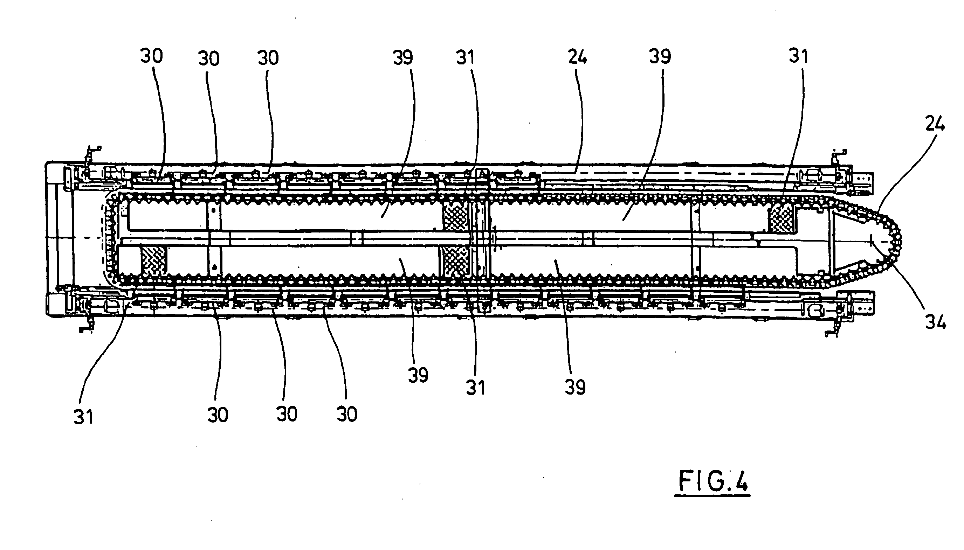

In der in Fig. 4 dargestellten modifizierten Heizstrecke (24) können durch die größere Anzahl von Heizelementen (30) eine größere Menge von Vorformlingen (1) je Zeiteinheit temperiert werden. Die Gebläse (31) leiten hier Kühlluft in den Bereich von Kühlluftkanälen (39) ein, die den zugeordneten Heizelementen (30) jeweils gegenüberliegen und über Ausströmöffnungen die Kühlluft abgeben. Durch die Anordnung der Ausströmrichtungen wird eine Strömungsrichtung für die Kühlluft im wesentlichen quer zu einer Transportrichtung der Vorformlinge (1) realisiert. Die Kühlluftkanäle (39) können im Bereich von den Heizelementen (30) gegenüberliegenden Oberflächen Reflektoren für die Heizstrahlung bereitstellen, ebenfalls ist es möglich, über die abgegebene Kühlluft auch eine Kühlung der Heizelemente (30) zu realisieren.

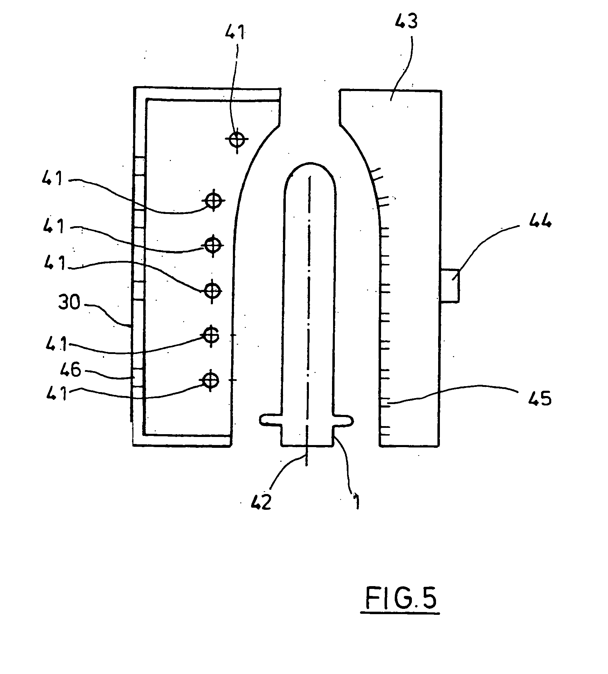

Fig. 5 zeigt eine schematische Darstellung eines Heizelementes (30), das mit einer Mehrzahl übereinander angeordneter Heizstrahler (41) versehen ist. Unter Verwendung der Heizstrahler (41) ist es möglich, in Richtung einer Längsachse (42) des Vorformlings (1) ein vorgegebenes Temperaturprofil zu erzeugen.

Gegenüberliegend zum Heizelement (30) ist ein Reflektor (43) angeordnet. Der Reflektor (43) weist einen Anschluß (44) zur Zuführung von Kühlluft auf. Ebenfalls ist es möglich, im Bereich des Reflektors (43) Ausströmöffnungen (45) anzuordnen, um Kühlgas in Richtung auf eine Oberfläche des Vorformlings (1) zu leiten. Im Bereich des Heizelementes (30) sind Ausströmöffnungen für ein Kühlgas angeordnet, um eine Kühlung der Heizstrahler (41) vorzunehmen. Die Ausströmöffnungen (46) sind mit einer nicht dargestellten Kühlluftzufuhr verbunden.

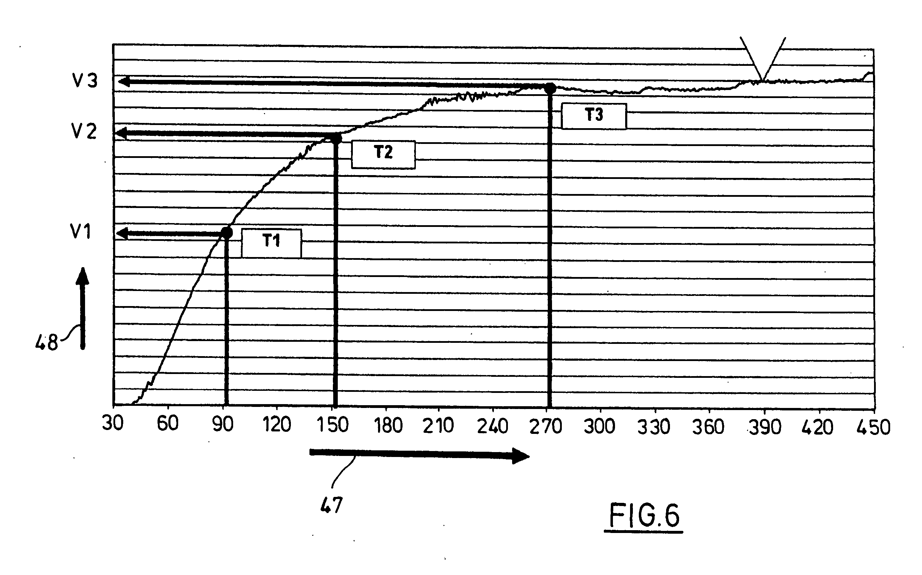

Fig. 6 veranschaulicht die Vorgabe der Reckgeschwindigkeit in Abhängigkeit von der Aufheizzeit. Die Aufheizzeit ist hierbei in Sekunden angegeben. Für einen konkret hergestellten Behälter (2) ist die Reckgeschwindigkeit vorzugsweise konstant. Aus dem Diagramm ist zu erkennen, daß zu einem Beginn der Produktionsaufnahme, an dem die Ofentemperatur noch relativ niedrig ist, auch eine relativ zu einem endgültigen Betriebszustand geringere Reckgeschwindigkeit gewählt wird. Eine geringere Reckgeschwindigkeit führt zu einem stärkeren Herausziehen von Material aus dem Boden des herzustellenden Behälters (2) und vermeidet hierdurch zu dicke Materialansammlungen, die ansonsten aufgrund einer zu geringen Materialtemperatur zu befürchten wären.

Mit zunehmender Aufheizzeit und somit zunehmender Ofentemperatur wird die Reckgeschwindigkeit vermindert. Mit zunehmender Reckgeschwindigkeit wird das Material für die Längsreckung des Vorformlings (1) verstärkt aus dem Bereich der Seitenwandungen und weniger aus dem Bereich des Bodens des Vorformlings (1) herausgezogen. Aufgrund der steigenden Temperatur des Bodenbereiches des Vorformlings (1) mit zunehmender Aufheizzeit des Ofens ist das Material in diesem Bodenbereich jedoch auch weicher, so daß die Kombination aus einer erhöhten Materialtemperatur und einer verminderten Reckgeschwindigkeit zur Erreichung einer gewünschten Materialdicke im Bereich des Bodens des Behälters (2) führt.

Beispielhaft veranschaulicht Fig. 6 in Abhängigkeit von der Aufheizzeit (47) des Ofens und somit in Abhängigkeit von einer zunehmenden Ofentemperatur für drei Temperaturen T1, T2, T3 zugeordnete Werte V1, V2 und V3 der Reckgeschwindigkeit (48).

Die Vorgabe der Reckgeschwindigkeit (48) in Abhängigkeit von der Aufheizzeit (47) kann beispielsweise in Form einer reinen Steuerung erfolgen. Insbesondere ist jedoch daran gedacht, eine tatsächliche Ofentemperatur meßtechnisch zu erfassen und die Reckgeschwindigkeit in Abhängigkeit von dieser konkret gemessenen Ofentemperatur vorzugeben. Die Abhängigkeit der Reckgeschwindigkeit von der Ofentemperatur kann hierbei in Abhängigkeit von einer Geometrie der Vorformlinge (1) und der Behälter (2) sowohl linear als auch nicht linear sein. Die Zuordnung einer konkreten Reckgeschwindigkeit (48) zu einer Aufheizzeit (47) oder einer gemessenen Ofentemperatur kann beispielsweise über eine automatisch ausgelesene Tabelle oder über eine von einer Steuerung ausgewertete Rechenvorschrift definiert werden. Insbesondere ist hierbei an Steuerungen auf Basis eines Mikroprozessors gedacht.

## Patentansprüche

1. Verfahren zur Blasformung von Behältern (2), bei dem ein Vorformling (1) aus einem thermoplastischem Material nach einer thermischen Konditionierung entlang eines Transportweges im Bereich einer Heizstrecke (24) innerhalb einer Blasform (4) gereckt und durch Blasdruckeinwirkung in den Behälter (2) umgeformt wird, **dadurch gekennzeichnet, daß** im Bereich der Heizstrecke (24) angeordnete Heizelemente (30) während einer Produktion mit einer im wesentlichen konstanten Heizleistung betrieben werden und daß die Geschwindigkeit des Reckens bei der Herstellung von Behältern (2) unmittelbar im Anschluß an einen Beginn der Produktionsaufnahme unterschiedlich zur Geschwindigkeit des Reckens bei der Herstellung von Behältern (2) in einer Produktionsphase mit einem zeitlichen Abstand zur Produktionsaufnahme gesteuert wird.

2. Verfahren nach Anspruch 1, **dadurch gekennzeichnet, daß** die Reckgeschwindigkeit in Abhängigkeit von einer Aufheizzeit gesteuert wird.

3. Verfahren nach einem der Ansprüche 1 oder 2, **dadurch gekennzeichnet, daß** die Reckgeschwindigkeit in Abhängigkeit von einem Materialparameter des Vorformlings (1) gesteuert wird.

4. Verfahren nach einem der Ansprüche 1 bis 3, **dadurch gekennzeichnet, daß** die Reckgeschwindigkeit in Abhängigkeit von einer Ofentemperatur gesteuert wird.

5. Verfahren nach einem der Ansprüche 1 bis 3, **dadurch gekennzeichnet, daß** die Reckgeschwindigkeit in Abhängigkeit von einer Vorformlingsgeometrie gesteuert wird.

6. Verfahren nach einem der Ansprüche 1 bis 5, **dadurch gekennzeichnet, daß** die Ofentemperatur meßtechnisch erfaßt wird.

7. Verfahren nach einem der Ansprüche 1 bis 6, **dadurch gekennzeichnet, daß** durch eine vergrößerte Reckgeschwindigkeit ein vergrößertes Bodengewicht im Bereich des Behälters (2) generiert wird.

8. Verfahren nach einem der Ansprüche 1 bis 7, **dadurch gekennzeichnet, daß** durch eine verminderte Reckgeschwindigkeit ein vermindertes Bodengewicht im Bereich des Behälters (2) generiert wird.

9. Vorrichtung zur Blasformung von Behältern (2) aus einem thermoplastischen Material, die mindestens eine entlang eines Transportweges eines Vorformlings (1) angeordnete Heizstrecke (24) und eine mit einer Blasform (4) versehene Blasstation (3) aufweist, sowie bei der die Heizstrecke mindestens ein Heizelement (30) aufweist und bei der im Bereich (24) der Blasstation (3) eine Reckeinrichtung angeordnet ist, **dadurch gekennzeichnet, daß** das Heizelement (30) an eine Heizsteuerung angeschlossen ist, die einer Steuerungscharakteristik derart aufweist, daß die Heizelemente (30) mit einer zeitlich im wesentlichen konstanten Heizleistung betrieben werden und daß die Reckeinrichtung an eine Recksteuerung angeschlossen ist, die eine Steuerungscharakteristik derart aufweist, daß eine Reckgeschwindigkeit unmittelbar im Anschluß an einen Start des Betriebes der Vorrichtung unterschiedlich zu einer Reckgeschwindigkeit in einer Produktionsphase mit einem zeitlichen Abstand zur Aufnahme des Betriebes vorgegeben ist.

10. Vorrichtung nach Anspruch 9, **dadurch gekennzeichnet, daß** die Steuerung zur Vorgabe der Reckgeschwindigkeit in Abhängigkeit von einer Aufheizzeit ausgebildet ist.

11. Vorrichtung nach Anspruch 9 oder 10, **dadurch gekennzeichnet, daß** die Steuerung zur Vorgabe der Reckgeschwindigkeit in Abhängigkeit von einem Materialparameter des Vorformlings (1) ausgebildet ist.

12. Vorrichtung nach Anspruch 9 oder 10, **dadurch gekennzeichnet, daß** die Steuerung zur Vorgabe der Reckgeschwindigkeit in Abhängigkeit von einer Ofentemperatur ausgebildet ist.

13. Vorrichtung nach Anspruch 9 oder 10, **dadurch gekennzeichnet, daß** die Steuerung zur Vorgabe der Reckgeschwindigkeit in Abhängigkeit von einer Vorformlingsgeometrie ausgebildet ist.

14. Vorrichtung nach einem der Ansprüche 9 bis 13, **dadurch gekennzeichnet, daß** die Steuerung an einen Sensor zur Erfassung einer Ofentemperatur angeschlossen ist.

15. Vorrichtung nach einem der Ansprüche 9 bis 14, **dadurch gekennzeichnet, daß** die Steuerungscharakteristik zur Vorgabe einer erhöhten Reckgeschwindigkeit zur Vorgabe eines erhöhten Bodengewichtes des geblasenen Behälters (2) ausgebildet ist.

16. Vorrichtung nach einem der Ansprüche 9 bis 15, **dadurch gekennzeichnet, daß** die Steuerungscharakteristik zur Vorgabe einer verminderten Reckgeschwindigkeit zur Generierung eines verminderten Bodengewichtes des geblasenen Behälters (2) ausgebildet ist.

## Claims

1. A method for blow moulding containers (2), in the case of which a preform (1) made of a thermoplastic material is stretched within a blow mould (4) after a thermal conditioning along a transport path in the area of a heating section (24) and is shaped into the container (2) by applying blowing pressure,
**characterised in that**
- heating elements (30) arranged in the area of the heating section (24) are operated at a substantially constant heating capacity during a production and that the speed of the stretching in response to the production of containers (2) immediately following an onset of the production start-up is controlled differently from the speed of the stretching in response to the production of containers (2) in a production phase at a time lag to the production start-up.

2. The method according to claim 1,
**characterised in that**
- the stretching speed is controlled as a function of a heat-up time.

3. The method according to any one of claims 1 or 2,
**characterised in that**
- the stretching speed is controlled as a function of a material parameter of the preform (1).

4. The method according to any one of claims 1 to 3,
**characterised in that**
- the stretching speed is controlled as a function of a furnace temperature.

5. The method according to any one of claims 1 to 3,
**characterised in that**
- the stretching speed is controlled as a function of a preform geometry.

6. The method according to any one of claims 1 to 5,
**characterised in that**
- the furnace temperature is captured metrologically.

7. The method according to any one of claims 1 to 6,
**characterised in that**
- an increased base weight is generated in the area of the container (2) by means of an increased stretching speed.

8. The method according to any one of claims 1 to 7,
**characterised in that**
- a reduced base weight is generated in the area of the container (2) by means of a reduced stretching speed.

9. A device for blow moulding containers (2) made of a thermoplastic material, which encompasses at least one heating section (24), which is arranged along a transport path of a preform (1), and a blowing station (3), which is provided with a blow mould (4), and in the case of which the heating section encompasses at least one heating element (30) and in the case of which a stretching device is arranged in the area (24) of the blowing station (3), **characterised in that** the heating element (30) is connected to a heat controller, which encompasses a control characteristic such that the heating elements (30) are operated with a heating capacity, which is substantially constant in terms of time and that the stretching device is connected to a stretch controller, which encompasses a control characteristic such that a stretching speed directly following a start of the operation of the device is provided differently to a stretching speed in a production phase at a time lag to the start-up of the operation.

10. The device according to claim 9,
**characterised in that**
- the controller is embodied to provide the stretching speed as a function of a heat-up time.

11. The device according to claim 9 or 10,
**characterised in that**
- the controller is embodied to provide the stretching speed as a function of a material parameter of the preform (1).

12. The device according to claim 9 or 10,
**characterised in that**
- the controller is embodied to provide the stretching speed as a function of a furnace temperature.

13. The device according to claim 9 or 10,
**characterised in that**
- the controller is embodied to provide the stretching speed as a function of a preform geometry.

14. The device according to any one of claims 9 to 13,
**characterised in that**
- the controller is connected to a sensor for capturing a furnace temperature.

15. The device according to any one of claims 9 to 14,
**characterised in that**
- the control characteristic is embodied to provide an increased stretching speed for providing an increased base weight of the blown container (2).

16. The device according to any one of claims 9 to 15,
**characterised in that**
- the control characteristic is embodied to provide a reduced stretching speed for generating a reduced base weight of the blown container (2).

## Revendications

1. Procédé de moulage par soufflage de récipients (2), dans le cadre duquel une préforme (1) en un matériau thermoplastique, après un conditionnement thermique le long d'un parcours dans une zone de chauffage (24), est étirée à l'intérieur d'un moule de soufflage (4) et, sous l'action d'une pression de soufflage, transformée en un récipient (2), **caractérisé en ce que** des éléments de chauffage (30) agencés dans la zone de chauffage (24) sont en service avec une puissance de chauffage essentiellement constante pendant une production, et **en ce que**, lors de la production des récipients (2), la vitesse d'étirage est commandée de façon à ce que, immédiatement après un début de production, cette vitesse est différente de la vitesse d'étirage appliquée pendant une phase ultérieure de production de récipients (2) un certain temps après le début de la production.

2. Procédé selon la revendication 1, **caractérisé en ce que** la vitesse d'étirage est commandée en fonction d'un temps de chauffage.

3. Procédé selon l'une des revendications 1 ou 2, **caractérisé en ce que** la vitesse d'étirage est commandée en fonction d'un paramètre du matériau de la préforme (1).

4. Procédé selon l'une des revendications 1 à 3, **caractérisé en ce que** la vitesse d'étirage est commandée en fonction d'une température de four.

5. Procédé selon l'une des revendications 1 à 3, **caractérisé en ce que** la vitesse d'étirage est commandée en fonction d'une géométrie de préforme.

6. Procédé selon l'une des revendications 1 à 5, **caractérisé en ce que** la température de four fait l'objet d'une saisie métrologique.

7. Procédé selon l'une des revendications 1 à 6, **caractérisé en ce que** une augmentation du poids du fond du récipient (2) est obtenue par une augmentation de la vitesse d'étirage.

8. Procédé selon l'une des revendications 1 à 7, **caractérisé en ce que** une réduction du poids du fond du récipient (2) est obtenue par une réduction de la vitesse d'étirage.

9. Dispositif de moulage par soufflage de récipients (2) en un matériau thermoplastique présentant au moins une zone de chauffage (24) agencée le long d'un parcours d'une préforme (1) et une station de soufflage (3) équipée d'un moule de soufflage (4), et dont la zone de chauffage présente au moins un élément de chauffage (30), et dans lequel un dispositif d'étirage est agencé dans la zone (24) de la station de soufflage (3), **caractérisé en ce que** l'élément de chauffage (30) est branché sur une commande de chauffage qui présente une caractéristique de commande telle que les éléments de chauffage (30) sont en service avec une puissance de chauffage essentiellement constante dans le temps, et **en ce que** le dispositif d'étirage est branché sur une commande d'étirage qui présente une caractéristique de commande telle qu'une vitesse d'étirage appliquée immédiatement après un démarrage du dispositif est différente d'une vitesse d'étirage appliquée pendant une phase ultérieure de production un certain temps après le début de la production.

10. Procédé selon la revendication 9, **caractérisé en ce que** la commande de la vitesse d'étirage est conçue pour opérer en fonction d'un temps de chauffage.

11. Procédé selon la revendication 9 ou 10, **caractérisé en ce que** la commande de la vitesse d'étirage est conçue pour opérer en fonction d'un paramètre du matériau de la préforme (1).

12. Procédé selon la revendication 9 ou 10, **caractérisé en ce que** la commande de la vitesse d'étirage est conçue pour opérer en fonction d'une température de four.

13. Procédé selon la revendication 9 ou 10, **caractérisé en ce que** la commande de la vitesse d'étirage est conçue pour opérer en fonction d'une géométrie de préforme.

14. Procédé selon l'une des revendications 9 à 13, **caractérisé en ce que** la commande est branchée sur un capteur pour la saisie d'une température de four.

15. Procédé selon l'une des revendications 9 à 14, **caractérisé en ce que** la caractéristique de commande est conçue pour définir une vitesse d'étirage supérieure résultant en une augmentation du poids du fond du récipient moulé (2).

16. Procédé selon l'une des revendications 9 à 15, **caractérisé en ce que** la caractéristique de commande est conçue pour définir une vitesse d'étirage inférieure résultant en une réduction du poids du fond du récipient moulé (2).
